(19) Europäisches Patentamt
European Patent Office
Office européen des brevets

(11) EP 4 435 080 B1

(12) # EUROPEAN PATENT SPECIFICATION

(45) Date of publication and mention of the grant of the patent:
**20.08.2025 Bulletin 2025/34**

(21) Application number: **23164188.7**

(22) Date of filing: **24.03.2023**

(51) International Patent Classification (IPC):
***C11D 3/04*** *(2006.01)* ***C11D 3/50*** *(2006.01)*
***C11D 7/10*** *(2006.01)* ***C11D 11/02*** *(2006.01)*

(52) Cooperative Patent Classification (CPC):
**C11D 3/505; C11D 3/046; C11D 7/10; C11D 11/02**

(54) **A PROCESS OF MAKING A SALTED SPRAY-DRIED PERFUME MICROCAPSULE PARTICLE**

VERFAHREN ZUR HERSTELLUNG VON SPRÜHGETROCKNETEN PARFÜMMIKROKAPSELPARTIKELN MIT SALZ

PROCÉDÉ DE FABRICATION D’UNE PARTICULE DE MICROCAPSULE DE PARFUM SÉCHÉE PAR PULVÉRISATION ET SALÉE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**25.09.2024 Bulletin 2024/39**

(73) Proprietor: **The Procter & Gamble Company**
**Cincinnati, OH 45202 (US)**

(72) Inventor: **ANDREU, Patricia**
**Newcastle upon Tyne, NE12 9BZ (GB)**

(74) Representative: **P&G Patent Belgium UK**
**Temselaan 100**
**1853 Strombeek-Bever (BE)**

(56) References cited:
**EP-A1- 1 421 167 US-A1- 2021 339 217**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 435 080 B1

## Description

FIELD OF THE INVENTION

The present invention relates to a process of making a salted spray-dried perfume microcapsule particle.

BACKGROUND OF THE INVENTION

Laundry treatment applications, such as laundry and fabric enhancing, as well as many other treatment applications, seek to provide freshness benefits to the treated surfaces. A common method of providing freshness benefits is to use a perfume microcapsule.

Perfume oil is often flammable, sometimes highly flammable, and the method of making the perfume microcapsule, as well as the method of transporting the perfume microcapsule needs to be carefully controlled to mitigate any flammable risks, including explosion risks.

The inventors have discovered that the addition of sodium chloride into an aqueous perfume microcapsule mixture that is subsequently spray-dried provides a salted spray-dried perfume microcapsule particle that has low flammable risk, including low risk of explosion, even during storage and transport.

EP1421167A1 discloses a process for the manufacture of a perfumed coloured granular composition for use as speckles in a particulate laundry detergent composition, characterised in that it comprises the steps of:_(i) layering sodium chloride granular material with a finely divided porous particulate material; (ii) mixing an aqueous perfume emulsion and a colourant with the layered sodium chloride of step (i); and (iii) layering the resultant material with a finely divided porous particulate material. wherein the finely divided porous particulate material has a number average particle size of at most 100 microns and the total amount of layering agent is from 0.1 to 10 wt% based on the speckles.

SUMMARY OF THE INVENTION

The present invention provides a process of making a salted spray-dried perfume microcapsule particle, wherein the process comprises the steps:

(a) preparing an aqueous perfume microcapsule mixture comprising from 20wt% to 70wt% perfume microcapsules;
(b) contacting sodium chloride to the aqueous perfume microcapsule mixture to form a salted aqueous perfume microcapsule mixture comprising from 2.0wt% to 10wt% said sodium chloride; and
(c) spray-drying the salted aqueous perfume microcapsule mixture to form a salted spray-dried perfume microcapsule particle, wherein the salted spray-dried perfume microcapsule particle comprises from 4.0wt% to 20wt% said sodium chloride.

DETAILED DESCRIPTION OF THE INVENTION

Process of Making a Salted Spray-Dried Perfume Microcapsule Particle.

The process comprises the steps:

(a) preparing an aqueous perfume microcapsule mixture comprising from 20wt% to 70wt% perfume microcapsules;
(b) contacting sodium chloride to the aqueous perfume microcapsule mixture to form a salted aqueous perfume microcapsule mixture comprising from 2.0wt% to 10wt% said sodium chloride; and
(c) spray-drying the salted aqueous perfume microcapsule mixture to form a salted spray-dried perfume microcapsule particle, wherein the salted spray-dried perfume microcapsule particle comprises from 4.0wt% to 20wt% said sodium chloride.

Step (a), Preparing an Aqueous Perfume Microcapsule Mixture

Step (a) prepares an aqueous perfume microcapsule mixture comprising from 20wt% to 70wt% perfume microcapsules.

The aqueous perfume microcapsule mixture can be prepared by combining a perfume with a shell material in water to form an emulsion, and then encapsulating the perfume with the shell material to form an aqueous perfume microcapsule mixture.

Other ingredients may be present, for example an initiator, and a partitioning modifier, pH adjuster, an emulsifier, a deposition aid, a structurant, and any combination thereof.

The encapsulation of the perfume can occur by heating the emulsion in one or more heating steps to form a shell encapsulating the perfume core, thereby forming perfume microcapsules that are typically dispersed in an aqueous continuous phase.

Step (a) can be carried out in any suitable equipment, including continuous stirred tank reactors, homogenizers, turbine agitators, recirculating pumps, paddle mixers, plough shear mixers, ribbon blenders, vertical axis granulators and drum mixers, both in batch and, where available, in continuous process configurations, and extruders.

Step (b), Forming a Salted Aqueous Perfume Microcapsule Mixture.

Step (b) contacts sodium chloride to the aqueous perfume microcapsule mixture to form a salted aqueous perfume microcapsule mixture comprising from 2.0wt% to 10wt% said sodium chloride.

Step (b) is preferably carried out in a mixer.

Step (b) may be carried out in a mixer having a tip speed of from $3.0ms^{-1}$ to $20ms^{-1}$.

Step (b) may be carried out in a mixer having a power to volume ratio of from 20k $Wm^{-3}$ to $20kWm^{-3}$.

Step (b) is carried out in a mixer, wherein said sodium chloride and said aqueous perfume microcapsule mixture are mixed together for at least five minutes, or from 5.0 minutes to 20 minutes, to form said salted aqueous perfume microcapsule mixture.

Other ingredients may be present, for example a deposition aid.

Step (c), Spray-Drying the Salted Aqueous Perfume Microcapsule Mixture

Step (c) spray-dries the salted aqueous perfume microcapsule mixture to form a salted spray-dried perfume microcapsule particle, wherein the salted spray-dried perfume microcapsule particle comprises from 4.0wt% to 20wt% said sodium chloride.

Step (c) is typically carried out in a spray-drying tower.

Step (c) can be carried out in a spray-drying tower having an air inlet temperature of from 140°C to 220°C, or from 160°C to 210°C or from 180°C to 200°C.

Step (c) can be carried out in a spray-drying tower, and wherein said salted aqueous perfume microcapsule mixture is sprayed into said spray-drying tower by a means selected from:

(a) a spinning wheel nozzle being operated at a rotation of at least 10,000rpm; and/or
(b) a high-pressure nozzle being operated at an atomizer pressure of at least $3.5x10^6$ Pa.

Aqueous Perfume Microcapsule Mixture.

The aqueous perfume microcapsule mixture comprises from 20wt% to 70wt% perfume microcapsules, preferably from 30wt% to 60wt% perfume microcapsules, or from 40wt% to 50wt% perfume microcapsules.

The aqueous perfume microcapsule mixture may comprise from 30wt% to 80wt%, or from 40wt% to 70wt%, or from 50wt% to 60wt% water.

The aqueous perfume microcapsule mixture may comprise other ingredients, for example an initiator, and a partitioning modifier, pH adjuster, an emulsifier, a deposition aid, and any combination thereof.

Salted Aqueous Perfume Microcapsule Mixture.

The salted aqueous perfume microcapsule mixture comprises from 2.0wt% to 10wt% said sodium chloride.

Preferably, the salted aqueous perfume microcapsule mixture comprises from 2.0wt% to 8.0wt%, or from 2.0wt% to 6.0wt%, or from 2.0wt% to 5.0wt% said sodium chloride.

The salted aqueous perfume microcapsule mixture may comprise a deposition aid.

Perfume Microcapsules.

The perfume microcapsule typically comprises a shell material that encapsulates a perfume core of perfume raw materials.

Salted Spray-Dried Perfume Microcapsule Particle.

The salted perfume microcapsule typically comprises a shell material that encapsulates a perfume core of

perfume raw materials.

The salted spray-dried perfume microcapsule particle, wherein the salted spray-dried perfume microcapsule particle comprises from 4.0wt% to 20wt% said sodium chloride, or from 5.0wt% to 20wt%, or from 5.0wt% to 15wt%, or from 5.0wt% to 10wt% said sodium chloride.

The salted spray-dried perfume microcapsule particle may have a particle size distribution such that the $D_{50}$ particle size is in the range of from 150μm to 300μm. The salted spray-dried perfume microcapsule particle may have a particle size distribution such that the $D_{10}$ particle size is in the range of from 10μm to less than 90μm. The salted spray-dried perfume microcapsule particle may have a particle size distribution such that the $D_{90}$ particle size is in the range of from greater than 300μm to less than 500μm. The particle size is typically determined by laser diffraction.

The salted spray-dried perfume microcapsule particle may have a bulk density in the range of from 300g/l to 400g.l. The bulk density is typically measured by a cup density method. A suitable method is as follows: A 0.5L cup is filled with the powder using a funnel to enable free flowing of the powder. A spatula is used to remove excess powder exceeding the dimensions of the cup. The weight of powder in the cup is measured (in grams) using a balance and divided by the 0.5L to calculate the density (in g/L).

Sodium Chloride.

The sodium chloride typically has a solubility saturation point at 20°C in deionized water of greater than 10g/100ml, preferably greater than 15g/100ml, or greater than 20g/100ml, or greater than 25g/100ml, or greater than 30g/100ml.

Perfume Raw Materials.

Any perfume raw material, or combinations thereof, can be used as core material(s) for the perfume microcapsule. Particularly suitable perfume raw materials are disclosed below.

| Item | Common Name | IUPAC Name |
|---|---|---|
| 1 | Methyl 2-methyl butyrate | methyl 2-methylbutanoate |
| 2 | Isopropyl 2-methyl butyrate | propan-2-yl 2-methylbutanoate |
| 3 | Ethyl-2 Methyl Butyrate | ethyl 2-methylbutanoate |
| 4 | Ethyl-2 Methyl Pentanoate | ethyl 2-methylpentanoate |
| 5 | Ethyl heptanoate | ethyl heptanoate |
| 6 | Ethyl octanoate | Ethyl octanoate |
| 7 | isobutyl hexanoate | 2-methylpropyl hexanoate |
| 8 | Amyl butyrate | pentyl butanoate |
| 9 | Amyl heptanoate | Pentyl heptanoate |
| 10 | Isoamyl isobutyrate | 3-methylbutyl 2-methylpropanoate |
| 11 | Hexyl acetate | hexyl acetate |
| 12 | hexyl butyrate | hexyl butanoate |
| 13 | hexyl isobutyrate | hexyl 2-methylpropanoate |
| 14 | hexyl isovalerate | hexyl 3-methylbutanoate |
| 15 | hexyl propionate | hexyl propanoate |
| 16 | Ethyl 2-cyclohexyl propanoate | ethyl 2-cyclohexylpropanoate |
| 17 | Ethyl 3,5,5-trimethyl hexanoate | ethyl 3,5,5-trimethylhexanoate |
| 18 | glyceryl 5-hydroxydecanoate | 2,3-dihydroxypropyl 5-hydroxydecanoate |
| 19 | Prenyl acetate | 3-methyl 2-butenyl acetate |
| 20 | 3-methyl 2-butenyl acetate | 3-methyl 2-butenyl acetate |
| 21 | methyl 3-nonenoate | methyl non-3-enoate |
| 22 | Ethyl (E)-dec-4-enoate | Ethyl (E)-dec-4-enoate |

(continued)

| Item | Common Name | IUPAC Name |
|---|---|---|
| 23 | Ethyl (E)-oct-2-enoate | Ethyl (E)-oct-2-enoate |
| 24 | Ethyl 2,4-decadienoate | ethyl (2E,4Z)-deca-2,4-dienoate |
| 25 | Ethyl 3-octenoate | ethyl (E)-oct-3-enoate |
| 26 | Citronellyl acetate | 3,7-dimethyloct-6-enyl acetate |
| 27 | Ethyl trans-2-decenoate | ethyl (E)-dec-2-enoate |
| 28 | 2-hexen-1-yl isovalerate | [(E)-hex-2-enyl] acetate |
| 29 | 2-hexen-1-yl propionate | [(E)-hex-2-enyl] propanoate |
| 30 | 2-hexen-1-yl valerate | [(E)-hex-2-enyl] pentanoate |
| 31 | 3-hexen-1-yl (E)-2-hexenoate | [(Z)-hex-3-enyl] (E)-hex-2-enoate |
| 32 | 3-Hexen-1-yl 2-methyl butyrate | [(Z)-hex-3-enyl] 2-methylbutanoate |
| 33 | 3-hexen-1-yl acetate | [(Z)-hex-3-enyl] acetate |
| 34 | 3-hexen-1-yl benzoate | [(Z)-hex-3-enyl] benzoate |
| 35 | 3-hexen-1-yl formate | [(Z)-hex-3-enyl] formate |
| 36 | 3-hexen-1-yl tiglate | [(Z)-hex-3-enyl] (Z)-2-methylbut-2-enoate |
| 37 | 2-methyl butyl 2-methyl butyrate | 2-methylbutyl 2-methylbutanoate |
| 38 | Butyl isovalerate | butyl 3-methylbutanoate |
| 39 | Geranyl acetate | [(2E)-3,7-dimethylocta-2,6-dienyl] acetate |
| 40 | Geranyl butyrate | [(2E)-3,7-dimethylocta-2,6-dienyl] butanoate |
| 41 | Geranyl isovalerate | [(3E)-3,7-dimethylocta-3,6-dienyl] 3-methylbutanoate |
| 42 | Geranyl propionate | [(2E)-3,7-dimethylocta-2,6-dienyl] propanoate |
| 43 | Allyl cyclohexane acetate | prop-2-enyl 2-cyclohexylacetate |
| 44 | Allyl Cyclohexyl Propionate | prop-2-enyl 3-cyclohexylpropanoate |
| 45 | allyl cyclohexyl valerate | prop-2-enyl 5-cyclohexylpentanoate |
| 46 | benzyl octanoate | benzyl octanoate |
| 47 | cocolactone | 6-pentyl-5,6-dihydropyran-2-one |
| 48 | coconut decanone | 8-methyl-1-oxaspiro(4.5)decan-2-one |
| 49 | gamma undecalactone | 5-heptyloxolan-2-one |
| 50 | gamma-decalactone | 5-hexyloxolan-2-one |
| 51 | gamma-dodecalactone | 5-octyloxolan-2-one |
| 52 | jasmin lactone | 6-[(E)-pent-2-enyl]oxan-2-one |
| 53 | Jasmolactone | 5-[(Z)-hex-3-enyl]oxolan-2-one |
| 54 | Nonalactone | 6-butyloxan-2-one |
| 55 | 6-acetoxydihydrotheaspirane | [2a,5a(S*)]-2,6,10,10-tetramethyl-1-oxaspiro[4.5]decan-6-yl acetate |
| 56 | Phenoxyethyl isobutyrate | 2-(phenoxy)ethyl 2-methylpropanoate |
| 57 | Pivacyclene | |
| 58 | Verdox | (2-tert-butylcyclohexyl) acetate |
| 59 | cyclobutanate | 3a,4,5,6,7,7a-hexahydro-4,7-methano-1g-inden-5(or 6)-yl butyrate |

(continued)

| Item | Common Name | IUPAC Name |
|---|---|---|
| 60 | Dimethyl Anthranilate | methyl 2-methylaminobenzoate |
| 61 | Methyl Antranilate | methyl 2-aminobenzoate |
| 62 | Octyl Aldehyde | Octanal |
| 63 | Nonanal | Nonanal |
| 64 | Decyl aldehyde | Decanal |
| 65 | Lauric Aldehyde | Dodecanal |
| 66 | Methyl Nonyl Acetaldehyde | 2-methyl undecanal |
| 67 | Methyl Octyl Acetaldehyde | 2-methyl decanal |
| 68 | 2,4 -Hexadienal | (2E,4E)-hexa-2,4-dienal |
| 69 | Intreleven Aldehyde | undec-10-enal |
| 70 | Decen-1-al | (E)-dec-2-enal |
| 71 | Nonen-1-al | (E)-2-nonen-1-al |
| 72 | Adoxal | 2,6,10-trimethylundec-9-enal |
| 73 | Geraldehyde | (4Z)-5,9-dimethyldeca-4,8-dienal |
| 74 | Iso cyclo citral | 2,4,6-trimethylcyclohex-3-ene-1-carbaldehyde |
| 75 | d-limonene mainly | 1-methyl-4-prop-1-en-2-yl-cyclohexene |
| 76 | Ligustral | 2,4-dimethylcyclohex-3-ene-1-carbaldehyde |
| 77 | Myrac aldehyde | 4-(4-methylpent-3-enyl)cyclohex-3-ene-1-carbaldehyde |
| 78 | Tridecenal | tridec-2-enal |
| 79 | Triplal | 2,4-dimethyl-3-cyclohexene-1-carboxaldehyde |
| 80 | Vertoliff | 1,2-dimethylcyclohex-3-ene-1-carbaldehyde |
| 81 | Cyclal C | 2,4-dimethylcyclohex-3-ene-1-carbaldehyde |
| 82 | Anisic aldehyde | 4-methoxybenzaldehyde |
| 83 | Helional | 3-(1,3-benzodioxol-5-yl)-2-methylpropanal |
| 84 | Heliotropin | 1,3-benzodioxole-5-carbaldehyde |
| 85 | Neocaspirene | |
| 86 | Beta Naphthol Ethyl Ether | 2-ethoxynaphtalene |
| 87 | Beta Naphthol Methyl Ether | 2-methoxynaphtalene |
| 88 | hyacinth ether | 2-cyclohexyloxyethylbenzene |
| 89 | 2-heptyl cyclopentanone (fleuramone) | 2-heptylcyclopentan-1-one |
| 90 | menthone-8-thioacetate | O-[2-[(1 S)-4-methyl-2-oxocyclohexyl]propan-2-yl] ethanethioate |
| 91 | Nectaryl | 2-[2-(4-methyl-1-cyclohex-3-enyl)propyl]cyclopentan-1-one |
| 92 | Phenyl Naphthyl Ketone | naphthalen-2-yl-phenylmethanone |
| 93 | decen-1-yl cyclopentanone | 2-[(2E)-3,7-dimethylocta-2,6-dienyl] cyclopentan-1-one |
| 94 | fruity cyclopentanone (veloutone) | 2,2,5-trimethyl-5-pentylcyclopentan-1-one |
| 95 | 4-methoxy-2-methyl butane thiol (blackcurrant mercaptan) | 4-methoxy-2-methylbutane-2-thiol |

(continued)

| Item | Common Name | IUPAC Name |
|---|---|---|
| 96 | Grapefruit Mercaptan | 2-(4-methyl-1-cyclohex-3-enyl)propane-2-thiol |
| 97 | Buccoxime | N-(1,5-dimethyl-8-bicyclo[3.2.1]octanylidene)hydroxylamine |
| 98 | Labienoxime | 2,4,4,7-Tetramethyl-6,8-nonadiene-3-one oxime |
| 99 | Undecavertol | (E)-4-methyldec-3-en-5-ol |
| 100 | Decanal diethyl acetal | 1,1-diethoxydecane |
| 101 | Diethyl maleate | diethyl but-2-enedioate |
| 102 | Ethyl Acetoacetate | ethyl 3-oxobutanoate |
| 103 | frutonile | 2-Methyldecanenitrile |
| 104 | Methyl dioxolan | ethyl 2-(2-methyl-1,3-dioxolan-2-yl)acetate |
| 105 | Cetalox | 3a,6,6,9a-tetramethyl-2,4,5,5a,7,8,9,9b-octahydro-1H-benzo[e][1]benzofuran |
| 106 | Cyclopentol | |
| 107 | Delta-damascone | (E)-1-(2,6,6-trimethyl-1-cyclohex-3-enyl)but-2-en-1-one |
| 108 | Eucalyptol | 1,3,3-trimethyl- 2-oxabicyclo[2,2,2]octane |
| 109 | Flor acetate | |
| 110 | Ionone gamma methyl | (E)-3-methyl-4-(2,6,6-trimethyl-1-cyclohex-2-enyl) but-3-en-2-one |
| 111 | Laevo trisandol | |
| 112 | Linalool | 3,7-dimethylocta-1,6-dien-3-ol |
| 113 | Violiff | [(4Z)-1-cyclooct-4-enyl] methyl carbonate |
| 114 | Cymal | 3-(4-propan-2-ylphenyl)butanal |
| 115 | Bourgeonal | 3-(4-tert-butylphenyl)propanal |

Shell Material.

The shell material preferably comprises a polyacrylate polymer. The shell material can comprise from about 50wt% to about 100wt%, more preferably from about 70wt% to about 100wt%, more preferably from about 80wt% to about 100wt%, by weight of the shell material, of polyacrylate polymer.

The shell material can optionally further comprise polyvinyl alcohol. The shell material can comprise from about 0.5wt% to about 40wt%, preferably from about 0.5wt% to about 20wt%, preferably from about 0.5wt% to about 10wt%, preferably from about 0.8wt% to about 5wt%, by weight of the shell material, of polyvinyl alcohol.

The polyacrylate polymer of the shell material can be derived from a material that comprises one or more multifunctional acrylate moieties. Preferably the multifunctional acrylate moiety is selected from group consisting of tri-functional acrylate, tetra- functional acrylate, penta-functional acrylate, hexa-functional acrylate, hepta-functional acrylate, and mixtures thereof.

The polyacrylate polymer can optionally comprise a moiety selected from the group consisting of an amine acrylate moiety, methacrylate moiety, a carboxylic acid acrylate moiety, carboxylic acid methacrylate moiety, and combinations thereof.

The polyacrylate polymer can be derived from a material that comprises one or more multifunctional acrylate and/or optionally a material that comprises one or more methacrylate moieties, wherein the ratio of material that comprises one or more multifunctional acrylate moieties to material that comprises one or more methacrylate moieties is from about 999:1 to about 6:4, more preferably from about 99:1 to about 8:1, and more preferably from about 99:1 to about 8.5:1. Preferably the multifunctional acrylate moiety is selected from group consisting of tri-functional acrylate, tetra- functional acrylate, penta-functional acrylate, hexa-functional acrylate, hepta-functional acrylate, and mixtures thereof. The polyacrylate polymer can optionally comprise a moiety selected from the group consisting of an amine acrylate moiety,

methacrylate moiety, a carboxylic acid acrylate moiety, carboxylic acid methacrylate moiety, and combinations thereof.

The polyacrylate polymer of the shell material preferably comprises a cross-linked polyacrylate polymer.

The polyvinyl alcohol of the shell material, when present, preferably has one or more of the following properties:

(a) a hydrolysis degree from about 55% to about 99%, preferably from about 75% to about 95%, preferably from about 85% to about 90%, preferably from about 87% to about 89%; and/or

(b) a viscosity of from about 40 cps to about 80 cps, preferably from about 45 cps to about 72 cps, preferably from about 45 cps to about 60 cps, preferably 45 cps to 55 cps in 4% water solution at 20°C; and/or

(c) a degree of polymerization of from about 1500 to about 2500, preferably from about 1600 to about 2200, preferably from about 1600 to about 1900, preferably from about 1600 to about 1800; and/or

(d) a weight average molecular weight of from about 130,000 to about 204,000, preferably from about 146,000 to about 186,000, perferably from about 146,000 to about 160,000, preferably from about 146,000 to about 155,000; and/or

(e) a number average molecular weight of from about 65,000 to about 110,000, preferably from about 70,000 to about 101,000, perferably from about 70,000 to about 90,000, preferably from about 70,000 to about 80,000.

Other suitable shell materials include polyethylenes, polyamides, polystyrenes, polyisoprenes, polycarbonates, polyesters, polyureas, polyurethanes, polyolefins, polysaccharides, epoxy resins, vinyl polymers, and mixtures thereof.

Other suitable shell materials are selected from the group consisting of reaction products of one or more amines with one or more aldehydes, such as urea cross-linked with formaldehyde or gluteraldehyde, melamine cross-linked with formaldehyde; gelatin-polyphosphate coacervates optionally cross-linked with gluteraldehyde; gelatin-gum arabic coacervates; cross-linked silicone fluids; polyamine reacted with polyisocyanates; acrylate monomers polymerized via free radical polymerization, and mixtures thereof.

Deposition Aid

Any suitable deposition aids can be used. A preferred deposition aid is chitosan.

The chitosan is a linear polysaccharide comprising randomly distributed β-(1,4)-linked D-glucosamine (deacetylated unit) and N-acetylglucosamine (acetylated unit) and generally has the following structure:

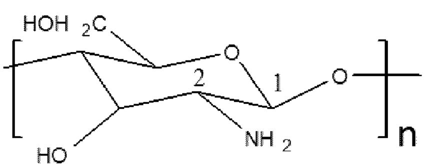
De-acetylated

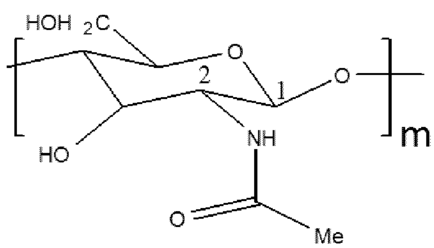
Acetylated

$$\%Deacetylation = 100n/(n+m)$$

wherein n and m vary depending on the average molecular weight of the chitosan and the degree of deacetylation of the chitosan. The degree of deacetylation (% deacetylation) of the chitosan is equal to 100n/(n+m).

Suitable chitosan can have a weight average molecular weight of at least about 100 kDa (kilodaltons) and/or a degree of deacetylation of at least about 60%.

Suitable chitosan can have lower degree of deacetylation values if the chitosan has relatively higher weight average molecular weight. The chitosan may also have lower weight average molecular weight values if the chitosan has relatively higher degree of deacetylation values. Preferred chitosans have degree of deacetylation values and weight average molecular weight values that are both relatively high, which tend to exhibit lower solubility in pH buffer solution across the pH range of 2-10.

Suitable chitosan can have a degree of deacetylation of at least about 60% and a weight average molecular weight of at least about 10 kDa.

Suitable chitosan can have a weight average molecular weight of at least about 100 kDa and a degree of deacetylation of at least about 50%.

Suitable chitosan can have either:

(i) a weight average molecular weight of at least about 500 kDa and a degree of deacetylation of at least about 50%; or
(ii) a weight average molecular weight of at least about 10 kDa and a degree of deacetylation of at least about 70%.

Suitable chitosan can have a degree of deacetylation of at least about 60%, preferably at least about 70%, and preferably at least about 75%.

Suitable chitosan can have a weight average molecular weight of at least about 100 kDa, preferably at least about 200 kDa, and preferably at least about 400 kDa.

Typically, the amine group of chitosan has a $pK_a$ of about 6.5 and results in protonation of the chitosan in acidic to neutral solutions, with the charge density largely dependent upon the degree of deacetylation of the chitosan and the pH of solution. As such, the chitosan is typically cationic and can readily bind to anionically charged surfaces.

The chitosan is generally disposed on the outer surface of the salted perfume microcapsule particle.

Other deposition aids may comprise a polymer selected from the group comprising: polysaccharides, cationically modified starch, and/or cationically modified guar; polysiloxanes; poly diallyl dimethyl ammonium halides; copolymers of poly diallyl dimethyl ammonium chloride and polyvinyl pyrrolidone; a composition comprising polyethylene glycol and polyvinyl pyrrolidone; acrylamides; imidazoles; imidazolinium halides; polyvinyl amine; copolymers of poly vinyl amine and N-vinyl formamide; polyvinyl formamide, polyvinyl alcohol; polyvinyl alcohol crosslinked with boric acid; polyacrylic acid; polyglycerol ether silicone cross-polymers; polyacrylic acids, polyacrylates, copolymers of polyvinylamine and polvyinylalcohol oligomers of amines, in one aspect a diethylenetriamine, ethylene diamine, bis(3-aminopropyl)piperazine, N,N-Bis-(3-aminopropyl)methylamine, tris(2-aminoethyl)amine and mixtures thereof; polyethyleneimine, a derivatized polyethyleneimine, in one aspect an ethoxylated polyethyleneimine; a polymeric compound comprising, at least two moieties selected from the moieties consisting of a carboxylic acid moiety, an amine moiety, a hydroxyl moiety, and a nitrile moiety on a backbone of polybutadiene, polyisoprene, polybutadiene/styrene, polybutadiene/acrylonitrile, carboxyl-terminated polybutadiene/acrylonitrile or combinations thereof; pre-formed coacervates of anionic surfactants combined with cationic polymers; polyamines and mixtures thereof.

Structurant/Rheology Modifier.

The compositions of the present disclosure may contain a rheology modifier and/or a structurant. Rheology modifiers may be used to "thicken" or "thin" liquid compositions to a desired viscosity. Structurants may be used to facilitate phase stability and/or to suspend or inhibit aggregation of particles in liquid composition, such as the delivery particles as described herein.

Suitable rheology modifiers and/or structurants may include non-polymeric crystalline hydroxyl functional structurants (including those based on hydrogenated castor oil), polymeric structuring agents, cellulosic fibers (for example, microfibrillated cellulose, which may be derived from a bacterial, fungal, or plant origin, including from wood), di-amido gellants, or combinations thereof. A preferred structurant is microfibrilated cellulose, preferably of plant origin.

Polymeric structuring agents may be naturally derived or synthetic in origin. Naturally derived polymeric structurants may comprise hydroxyethyl cellulose, hydrophobically modified hydroxyethyl cellulose, carboxymethyl cellulose, polysaccharide derivatives and mixtures thereof. Polysaccharide derivatives may comprise pectine, alginate, arabinogalactan (gum Arabic), carrageenan, gellan gum, xanthan gum, guar gum and mixtures thereof. Synthetic polymeric structurants may comprise polycarboxylates, polyacrylates, hydrophobically modified ethoxylated urethanes, hydrophobically modified non-ionic polyols and mixtures thereof. Polycarboxylate polymers may comprise a polyacrylate, polymethacrylate or mixtures thereof. Polyacrylates may comprise a copolymer of unsaturated mono- or di-carbonic acid and $C_1$-$C_{30}$ alkyl ester of the (meth)acrylic acid. Such copolymers are available from Noveon inc under the tradename Carbopol Aqua 30. Cross-linked polymers, such as cross-linked polyacrylate and/or polymers and/or copolymers, such as those that further include nonionic monomers such as acrylamide or methacrylamide monomers, may be useful as structurants. Another suitable structurant is sold under the tradename Rheovis CDE, available from BASF.

Preferred structurant is microfibrilated cellulose.

Partitioning modifier

Suitable partitioning modifiers are selected from the group consisting of vegetable oil, modified vegetable oil, isopropyl myristate, propan-2-yl tetradecanoate, and mixtures thereof. Suitable vegetable oils are selected from the group consisting of castor oil, soybean oil, and mixtures thereof. Suitable modified vegetable oils are selected from the group consisting of esterified vegetable oil, brominated vegetable oil, and mixtures thereof. Preferred partitioning modifiers are selected from isopropyl myristate, propan-2-yl tetradecanoate, and mixtures thereof.

Emulsifier

Optionally, the water phase may include an emulsifier. Non-limiting examples of emulsifiers include anionic surfactants (such as alkyl sulfates, alkyl ether sulfates, and/or alkyl benzenesulfonates), nonionic surfactants (such as alkoxylated alcohols, preferably comprising ethoxy groups), polyvinyl alcohol, and/or polyvinyl pyrrolidone. It may be that solubilized chitosan can provide emulsifying benefits in the present applications.
Emulsifier, if employed, is typically from about 0.1 to 40% by weight, preferably 0.2 to about 15% by weight, more typically 0.5 to 10% be weight, based on total weight of the aqueous phase.

Initiator

The (meth)acrylate polymer of the polymer wall may be further derived, at least in part, from at least one free radical initiator, preferably at least two free radical initiators. The at least one free radical initiator may preferably comprise a water-soluble or water-dispersible free radical initiator. One or more free radical initiators can provide a source of free radicals upon activation.
The amount of initiator present may be from about 2% to about 50%, preferably from about 5% to about 40%, more preferably from about 10% to about 40%, even more preferably from about 15% to about 40%, even more preferably from about 20% to about 35%, 30 or more preferably from about 20% to about 30%, by weight of the polymer wall. The (meth)acrylate polymer of the polymer wall may be derived from a first initiator and a second initiator, wherein the first and second initiators are present in a weight ratio of from about 5:1 to about 1:5, or preferably from about 3:1 to about 1:3, or more preferably from about 2:1 to about 1:2, or even more preferably from about 1.5:1 to about 1:1.5.
Suitable free radical initiators may include peroxy initiators, azo initiators, peroxides, and compounds such as 2,2'-azobismethylbutyronitrile, dibenzoyl peroxide. More particularly, and without limitation, the free radical initiator can be selected from the group of initiators comprising an azo or peroxy initiator, such as peroxide, dialkyl peroxide, alkylperoxide, peroxyester, peroxycarbonate, peroxyketone and peroxydicarbonate, 2,2'-azobis (isobutylnitrile), 2,2'-azobis(2,4-dimethylpentanenitrile), 2,2'-azobis (2,4-dimethylvaleronitrile), 2,2'-azobis(2-methylpropanenitrile), 2,2'-azobis(2-methylbutyronitrile), 1,1'-azobis (cyclohexanecarbonitrile), 15 1,1'-azobis(cyanocyclohexane), benzoyl peroxide, decanoyl peroxide; lauroyl peroxide; benzoyl peroxide, di(n-propyl)peroxydicarbonate, di(sec-butyl) peroxydicarbonate, di(2-ethylhexyl)peroxydicarbonate, 1,1-dimethyl-3-hydroxybutyl peroxyneodecanoate, a-cumyl peroxyneoheptanoate, t-amyl peroxyneodecanoate, t-butyl peroxyneodecanoate, t-amyl peroxypivalate, t-butyl peroxypivalate, 2,5-dimethyl 2,5-di (2-ethylhexanoyl peroxy)hexane, t20 amyl peroxy-2-ethyl-hexanoate, t-butyl peroxy-2-ethylhexanoate, t-butyl peroxyacetate, di-tamyl peroxyacetate, t-butyl peroxide, dit-amyl peroxide, 2,5-dimethyl-2,5-di-(tbutylperoxy) hexyne-3, cumene hydroperoxide, 1,1-di-(t-butylperoxy)-3,3,5-trimethylcyclohexane, 1,1-di-(t-butylperoxy)-cyclohexane, 1,1-di-(t-amylperoxy)-cyclohexane, ethyl-3,3-di-(t-butylperoxy)-butyrate, t-amyl perbenzoate, t-butyl perbenzoate, ethyl 3,3-di-(t-amylperoxy)-butyrate, and the like.

Method of Measuring the Power to Volume Ratio of a Mixer

The power to volume ratio is typically determined by direct measurement of the electrical power supplied to the mixer motor divided by the volume of the aqueous mixture in the tank multiplied by the motor efficiency.

$$\frac{P}{V} = \frac{Electrical\ power\ input}{Aqueous\ mixture\ volume} \cdot motor\ efficiency \qquad (1)$$

Method of Measuring Solubility

The water solubility of a substance is the saturation mass concentration of the substance in water at a given temperature. Water solubility is expressed in mass of solute per volume of solution, kg/m3 and/or g/100ml.
In a stepwise procedure, increasing amounts of the salt (approximately 1 g) are added to 100 ml of de-ionised water at 20 ± 0.5 °C. After each addition of salt sample, the mixture is shaken for 10 minutes, and the pH is measured. This process is repeated until the pH is not alter by more than 0.001% vs previous measurement.

EXAMPLES

Three liters of two slurry formulations A and B were prepared based on compositions given in Table 1 (percentage by weight). The slurry with perfume microcapsules was mixed with anhydrous silica using an impeller bench-top mixer for 15 min (example A). The same mixing conditions and time were used to fully dissolve NaCl in the example B.

The mixture was sprayed dried in a spray-drying tower with a spinning wheel atomizer rotating at 16000 rpm. The inlet air temperature was kept at 190°C and the fluid flow was controlled to be within a 8-10 liters/min range. The resultant spray-dried particle compositions are given in Table 2.

The resultant powder samples were assessed for the standard UN Test N.1 - Combustible Solids, compromising on Screening Test (ST) and Burning Rate Test (BR). The result of ST corresponds to the propagation time for a length of 200 mm of the dried powder (mold 250 mm x 10 mm x 20 mm) after being approach by an ignition source. The BR test evaluates the propagation time for a length of 100 mm of the powder pile using identical mold after pouring 1 ml of a wetting solution.

Table 1

| Slurry Compositions | | |
|---|---|---|
| Materials | A | B |
| Perfume oil | 25.9 | 25.5 |
| Perfume microcapsule | 16.8 | 16.6 |
| Sodium Chloride (NaCl) | 0 | 2.3 |
| Anhydrous silica | 1.3 | 1.3 |
| Water | 56 | 54.3 |

Table 2

| Powder Compositions | | |
|---|---|---|
| Materials | A | B |
| Perfume oil | 57.9 | 55.1 |
| Perfume microcapsules | 37.6 | 35.4 |
| Sodium Chloride (NaCl) | 0 | 5 |
| Anhydrous silica | 3 | 3 |
| Water | 1.5 | 1.5 |

Table 3

| Flammability results | | |
|---|---|---|
| Example | ST, s 200mm (<120 s flammable solid) | BR, s (<45s Class 4 combustible solid) |
| A | 80 | 33 |
| B | 182 | N/A |

## Claims

**1.** A process of making a salted spray-dried perfume microcapsule particle, wherein the process comprises the steps:

(a) preparing an aqueous perfume microcapsule mixture comprising from 20wt% to 70wt% perfume microcapsules;
(b) contacting sodium chloride to the aqueous perfume microcapsule mixture to form a salted aqueous perfume microcapsule mixture comprising from 2.0wt% to 10wt% said sodium chloride; and
(c) spray-drying the salted aqueous perfume microcapsule mixture to form a salted spray-dried perfume microcapsule particle, wherein the salted spray-dried perfume microcapsule particle comprises from 4.0wt% to 20wt% said sodium chloride.

**2.** A process according to claim 1, wherein said aqueous perfume microcapsule mixture comprises from 30wt% to 60wt% perfume microcapsules.

3. A process according to any preceding claim, wherein said salted aqueous perfume microcapsule mixture comprises from 2.0wt% to 5.0wt% said sodium chloride.

4. A process according to any preceding claim, wherein said salted spray-dried perfume microcapsule particle comprises from 5.0wt% to 20wt% said sodium chloride.

5. A process according to any preceding claim, wherein said aqueous perfume microcapsule mixture comprises 30wt% to 80wt% water.

6. A process according to any preceding claim, wherein step (b) is carried out in a mixer having a tip speed of from $5.0ms^{-1}$ to $50ms^{-1}$.

7. A process according to any preceding claim, wherein step (b) is carried out in a mixer having a power to volume ratio of from $2kWm^{-3}$ to $20kWm^{-3}$, wherein the power to volume ratio is a multiplication value between the motor efficiency of the mixer and a second ratio between an electrical power supplied to the mixer and a volume of the aqueous perfume microcapsule mixture.

8. A process according to any preceding claim, wherein step (b) is carried out in a mixer, and wherein said sodium chloride and said aqueous perfume microcapsule mixture are mixed together for at least five minutes to form said salted aqueous perfume microcapsule mixture.

9. A process according to any preceding claim, wherein step (c) is carried out in a spray-drying tower having an air inlet temperature of from 140°C to 220°C.

10. A process according to any preceding claim, wherein step (c) is carried out in a spray-drying tower, and wherein said salted aqueous perfume microcapsule mixture is sprayed into said spray-drying tower by a means selected from:

(a) a spinning wheel nozzle being operated at a rotation of at least 10,000rpm; and/or
(b) a high-pressure nozzle being operated at an atomizer pressure of at least $3.5x10^6$ Pa.

## Patentansprüche

1. Verfahren zum Herstellen eines gesalzenen sprühgetrockneten Duftstoff-Mikrokapselteilchens, wobei das Verfahren die Schritte umfasst:

(a) Vorbereiten einer wässrigen Duftstoff-Mikrokapselmischung, umfassend zu von 20 Gew.-% bis 70 Gew.-% Duftstoff-Mikrokapseln;
(b) Inkontaktbringen von Natriumchlorid mit der wässrigen Duftstoff-Mikrokapselmischung, um eine gesalzene wässrige Duftstoff-Mikrokapselmischung zu bilden, umfassend zu von 2,0 Gew.-% bis 10 Gew.-% das Natriumchlorid; und
(c) Sprühtrocknen der gesalzenen wässrigen Duftstoff-Mikrokapselmischung, um ein gesalzenes sprühgetrocknetes Duftstoff-Mikrokapselteilchen zu bilden, wobei das gesalzene sprühgetrocknete Duftstoff-Mikrokapselteilchen zu von 4,0 Gew.-% bis 20 Gew.-% das Natriumchlorid umfasst.

2. Verfahren nach Anspruch 1, wobei die wässrige Duftstoff-Mikrokapselmischung zu von 30 Gew.-% bis 60 Gew.-% Duftstoff-Mikrokapseln umfasst.

3. Verfahren nach einem der vorstehenden Ansprüche, wobei die gesalzene wässrige Duftstoff-Mikrokapselmischung zu von 2,0 Gew.-% bis 5,0 Gew.-% das Natriumchlorid umfasst.

4. Verfahren nach einem der vorstehenden Ansprüche, wobei das gesalzene sprühgetrocknete Duftstoff-Mikrokapselteilchen zu von 5,0 Gew.-% bis 20 Gew.-% das Natriumchlorid umfasst.

5. Verfahren nach einem der vorstehenden Ansprüche, wobei die wässrige Duftstoff-Mikrokapselmischung zu von 30 Gew.-% bis 80 Gew.-% Wasser umfasst.

6. Verfahren nach einem der vorstehenden Ansprüche, wobei Schritt (b) in einem Mischer, der eine Geschwindigkeit der

Spitze in einem Bereich von 5,0 $ms^{-1}$ bis 50 $ms^{-1}$ aufweist, durchgeführt wird.

**7.** Verfahren nach einem der vorstehenden Ansprüche, wobei Schritt (b) in einem Mischer, der ein Leistungs-Volumen-Verhältnis von 2 $kWm^{-3}$ bis 20 $kWm^{-3}$ aufweist, durchgeführt wird, wobei das Leistungs-Volumen-Verhältnis ein Multiplikationswert zwischen der Motoreffizienz des Mischers und einem zweiten Verhältnis zwischen einer dem Mischer zugeführten elektrischen Leistung und einem Volumen der wässrigen Duftstoff-Mikrokapselmischung ist.

**8.** Verfahren nach einem der vorstehenden Ansprüche, wobei Schritt (b) in einem Mischer durchgeführt wird und wobei das Natriumchlorid und die wässrige Duftstoff-Mikrokapselmischung mindestens fünf Minuten lang miteinander vermischt werden, um die gesalzene wässrige Duftstoff-Mikrokapselmischung zu bilden.

**9.** Verfahren nach einem der vorstehenden Ansprüche, wobei Schritt (c) in einem Sprühtrocknungsturm, der eine Lufteinlasstemperatur von 140 °C bis 220 °C aufweist, durchgeführt wird.

**10.** Verfahren nach einem der vorstehenden Ansprüche, wobei Schritt (c) in einem Sprühtrocknungsturm durchgeführt wird und wobei die gesalzene wässrige Duftstoff-Mikrokapselmischung durch ein Mittel in den Sprühtrocknungsturm gesprüht wird, das ausgewählt ist aus:

(a) einer Spinnraddüse, die mit einer Drehzahl von mindestens 10.000 U/min betrieben wird; und/oder
(b) einer Hochdruckdüse, die mit einem Zerstäuberdruck von mindestens $3{,}5 \times 10^6$ Pa betrieben wird.

## Revendications

**1.** Procédé de fabrication d'une microcapsule de parfum salée séchée par atomisation, dans lequel le procédé comprend les étapes :

(a) préparation d'un mélange aqueux de microcapsules de parfum comprenant de 20 % en poids à 70 % en poids de microcapsules de parfum ;
(b) mise en contact de chlorure de sodium avec le mélange aqueux de microcapsules de parfum pour former un mélange aqueux salé de microcapsules de parfum comprenant de 2,0 % en poids à 10 % en poids dudit chlorure de sodium ; et
(c) séchage par atomisation du mélange aqueux salé de microcapsules de parfum pour former une microcapsule de parfum salée séchée par atomisation, dans lequel la microcapsule de parfum salée séchée par atomisation comprend de 4,0 % en poids à 20 % en poids dudit chlorure de sodium.

**2.** Procédé selon la revendication 1, dans lequel ledit mélange aqueux de microcapsules de parfum comprend de 30 % en poids à 60 % en poids de microcapsules de parfum.

**3.** Procédé selon l'une quelconque revendication précédente, dans lequel ledit mélange aqueux salé de microcapsules de parfum comprend de 2,0 % en poids à 5,0 % en poids dudit chlorure de sodium.

**4.** Procédé selon l'une quelconque revendication précédente, dans lequel ladite microcapsule de parfum salée séchée par atomisation comprend de 5,0 % en poids à 20 % en poids dudit chlorure de sodium.

**5.** Procédé selon l'une quelconque revendication précédente, dans lequel ledit mélange aqueux de microcapsules de parfum comprend 30 % en poids à 80 % en poids d'eau.

**6.** Procédé selon l'une quelconque revendication précédente, dans lequel l'étape (b) est effectuée dans un mélangeur ayant une vitesse périphérique allant de 5,0 $ms^{-1}$ à 50 $ms^{-1}$.

**7.** Procédé selon l'une quelconque revendication précédente, dans lequel l'étape (b) est effectuée dans un mélangeur ayant un rapport de la puissance au volume allant de 2 $kWm^{-3}$ à 20 $kWm^{-3}$, dans lequel le rapport de la puissance au volume est une valeur de multiplication entre le rendement de moteur du mélangeur et un second rapport entre une puissance électrique alimentée au mélangeur et un volume du mélange aqueux de microcapsules de parfum.

**8.** Procédé selon l'une quelconque revendication précédente, dans lequel l'étape (b) est effectuée dans un mélangeur, et dans lequel ledit chlorure de sodium et ledit mélange aqueux de microcapsules de parfum sont mélangés ensemble

pendant au moins cinq minutes pour former ledit mélange aqueux salé de microcapsules de parfum.

**9.** Procédé selon l'une quelconque revendication précédente, dans lequel l'étape (c) est effectuée dans une tour de séchage par atomisation ayant une température d'entrée d'air allant de 140 °C à 220 °C.

**10.** Procédé selon l'une quelconque revendication précédente, dans lequel l'étape (c) est effectuée dans une tour de séchage par atomisation, et dans lequel ledit mélange aqueux salé de microcapsules de parfum est atomisé dans ladite tour de séchage par atomisation par un moyen choisi parmi :

(a) une buse à roue tournante étant mise en fonctionnement à une rotation d'au moins 10 000 tr/min ; et/ou
(b) une buse à haute pression étant mise en fonctionnement à une pression d'atomiseur d'au moins $3,5 \times 10^6$ Pa.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1421167 A1